# EUROPEAN PATENT APPLICATION

(11) **EP 1 538 503 A1**
(43) Date of publication of application: **08.06.2005**
(21) Application number: 04256648.9
(22) Date of filing: 27.10.2004
(51) Int. Cl.: G05B 23/02

(54) **Distributed power generation plant automated event assessment and mitigation plan determination process**

(30) Priority: 31.10.2003 US 697695
(71) Applicant: GENERAL ELECTRIC COMPANY, Schenectady, NY 12345 (US)
(72) Inventor: Benjamin, IV Cavelle P., Atlanta Georgia 30339 (US); Rambosek, Chris, Acworth Georgia 30101 (US); Paul, Douglas W., Marietta Georgia 30064 (US); Kavafyan, Philippe, 78600 Maisons Laffitte (FR); Thompson, Joseph H., Winston Georgia 30187 (US); Weathers, John S., Kennesaw Georgia 30144 (US); Voss, Denise, Kennesaw Georgia 30144 (US)
(74) Representative: Goode, Ian Roy

(57) **Abstract**

A system (10) is disclosed for detecting predefined events occurring in operating power generation equipment at a customer location and for diagnosing and responding to the predefined events. The system includes a plurality of sensors (14) at the customer location (11) for monitoring the power generation equipment and collecting operating data from the power generation equipment, a monitor (21) at the customer location for analyzing the operating data collected from the power generation equipment and for determining if any of the predefined events occurred during operation of the equipment , a management system (25) at a location different from the customer location for storing and retrieving historical data pertaining to the operation of fleet power generation equipment and to the occurrence of the predefined events in the fleet power generation equipment, an analysis platform for analyzing whether any predefined events have occurred, the analysis platform (34) including a first program resident in the monitor and a second program resident in the management system , and a plurality of coaching tools for using the collected operating data , determinations by the on-site monitor of whether any of the predefined events occurred, and historical data to determine the likely cause of any predefined events that have occurred and an action plan for responding to the events or to predict the consequences of the events and determine preventive action plans in response to the events.

## Description

The present invention relates to the monitoring of power generating equipment, and in particular, to a system and method for monitoring power generating equipment for the occurrence of predefined events and for providing recommendations for responding to the occurrence of the predefined events to prevent or solve problems.

The operation of power generating equipment, such as heavy duty gas or steam turbines and generators, can be affected by various types of events which can result in damage to the equipment or even a shutdown of the equipment. To prevent damage to or shutdown of the power generating equipment, it would be desirable to quickly determine the occurrence of certain predefined events and to provide a remedial action in response to the event to prevent consequences from the event such as the damage or shutdown of the equipment. These predefined events would include, by way of example, turbine trips or any events leading up to a trip, unacceptable gas turbine rotor bearing metal temperature rises, and unacceptable compressor discharge temperature rises for the compressed air used in gas turbine combustion systems. In a trip situation, the turbine shuts down and goes off the power grid.

Today, while there is operational monitoring of power generating equipment, such monitoring typically occurs both locally and manually in a way which prevents the diagnosis of problems in a timely manner for effective action to be taken to avoid equipment damage and/or shutdown. In current monitoring of power generating equipment, typically, equipment operating data is downloaded and manually reviewed to detect the occurrence of predefined events.

In an exemplary embodiment of the invention, a system for detecting predefined events occurring in operating power generation equipment and for diagnosing and responding to the predefined events comprises an on-site monitor for analyzing operating data collected from the power generation equipment and for determining if any of the predefined events occurred during operation of the power generation equipment, a plurality of sensors for collecting the operating data from the power generation equipment and for transferring the operating data to the monitor, a remote management system for storing and retrieving historical data pertaining to the operation of fleet power generation equipment and to the occurrence of the predefined events in the fleet power generation equipment and for storing and analyzing the operating data collected from the power generation equipment and the event determination, and at least one diagnostic tool for using the operating data, event determination and historical data to decide how to respond to the occurrence of any predefined events in the power generation equipment. The system can further comprise an analysis platform for analyzing whether any predefined events have occurred, the analysis platform including a first program resident in the monitor and a second program resident in the remote management system.

In another exemplary embodiment of the invention, a system for detecting predefined events occurring in operating power generation equipment at a customer location and for diagnosing and responding to the predefined events comprises a plurality of sensors at the customer location for monitoring the power generation equipment and collecting operating data from the power generation equipment, a monitor at the customer location for analyzing the operating data collected from the power generation equipment and for determining if any of the predefined events occurred during operation of the equipment, a management system at a location different from the customer location for storing and retrieving historical data pertaining to the operation of fleet power generation equipment and to the occurrence of the predefined events in the fleet power generation equipment, a communications device for transferring to the management system the operating data collected by the plurality of sensors and the determinations by the monitor of whether any of the predefined events occurred, an analysis platform for analyzing whether any predefined events have occurred, the analysis platform including a first program resident in the monitor and a second program resident in the management system, and a plurality of coaching tools for using the collected operating data, determinations by the on-site monitor of whether any of the predefined events occurred, and historical data to determine the likely cause of any predefined events that have occurred and an action plan for responding to the events or to predict the consequences of the events and determine preventive action plans in response to the events.

In yet another exemplary embodiment of the invention, a system for detecting predefined events occurring in operating power generation equipment and for diagnosing and responding to the predefined events comprises first means, located where the power generation equipment is located, for analyzing operating data collected from the power generation equipment and for determining if any of the predefined events occurred during operation of the equipment, means for collecting the operating data from the power generation equipment and for transferring the operating data to the first analyzing means, second means, located at a location different from the location of the power generation equipment, for analyzing operating data collected from the power generation equipment and for storing and retrieving historical data pertaining to the operation of fleet power generation equipment and to the occurrence of the predefined events in the fleet power generation equipment, and means for using the operating data, event data and historical data to determine how to respond to the occurrence of any predefined events in the power generation equipment. The system can further comprise an analysis platform including a first program resident in the first analyzing means for analyzing the operating data, and a second program resident in the second analyzing means for analyzing the operating data.

In yet a further another exemplary embodiment of the invention, a method of detecting predefined events occurring in operating power generation equipment and of diagnosing and responding to the predefined events comprises the steps of collecting operating data for the power generation equipment and storing the operating data at a location where the power generation equipment is located, analyzing at the location where the power generation equipment is located the operating data collected from the power generation equipment to determine if any of the predefined events occurred during operation of the equipment, storing at a location different from where the power generation equipment is located historical data pertaining to the operation of fleet power generation equipment, storing at the location different from where the power generation equipment is located the collected operating data and any determination as to the occurrence of any of the predefined events in the power generation equipment, and using the operating data, event data and historical data to determine if any of the predefined events occurred, and if so, how to respond to the occurrence of any predefined events in the power generation equipment.

The advantages of the present invention will be more completely understood and appreciated by careful study of the following, more detailed description of the presently preferred exemplary embodiment of the invention taken in conjunction with the accompanying drawing, in which:
Figure 1 is a schematic diagram illustrating the components of the system of the present invention for monitoring and assessing events on operating power generation equipment and mitigating consequences from such events.
Figures 2a and 2b are a flow chart depicting the method of the present invention for monitoring power generating equipment, detecting a predefined event, and analyzing and responding to the event.

The present invention is a method and system for remotely and automatically detecting predefined events occurring within operating power generation equipment and for diagnosing, either at the site of the equipment or at a central monitoring location, the predefined events so that solutions to the predefined events can be recommended to prevent further consequences occurring from the event. The system of the present invention is a "probabilistic" expert system that is segmented between the customer site where the operating power generating equipment is located and the central monitoring location and centrally located intranet-based coaching tools that are used by a monitoring team available 24 hours a day, seven days a week to provide recommendations and solutions to the predefined events using historical data from fleet operations. The present invention allows the monitoring team to communicate to the power generating equipment operators, in an expedited timeframe (typically less than two hours), potential causes of the predefined events and the consequences of such events. By analyzing the root cause of a predefined event, the monitoring team can recommend to the equipment operators possible actions to prevent further consequences, such as damage to, or shutdowns of, the equipment.

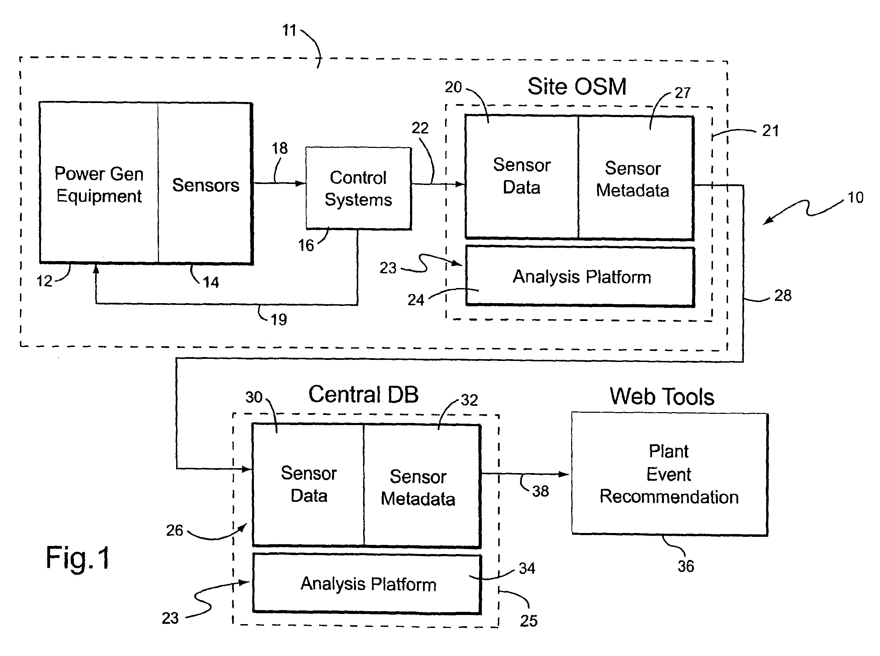

Figure 1 illustrates an exemplary embodiment of a system 10 according to the present invention for monitoring power generating equipment and providing recommendations for responding to predefined events. A first component of the present invention is the collection of data from operating power generating equipment located at a customer plant site and the automatic periodic transfer on a continuous basis of such data to a central data base. Referring to Figure 1, to perform the collection function, there is provided a plurality of different sensors 14 which collect operating data from power generation equipment 12, such as gas turbines, steam turbines, combined cycle turbines, and generators, located at customer site 11. Preferably, sensors 14 are temperature, pressure, flow and other machine state sensors that measure, by way of example, turbine inlet and outlet temperatures and mass flows of air and fuel.

The data collected by sensors 14 corresponding to the operation of power generation equipment 12 is transferred to control systems 16 through a first cable 18 connecting sensors 14 to control systems 16. Control systems 16 control startup, shutdown and operation of power generation equipment 12 through a second cable 19. Preferably, cables 18 and 19 are ethernet connections that are part of an intranet located at customer site 11.

From control systems 16, the operating data collected from equipment 12 by sensors 14 is then transferred through a third cable 22 to an on-site monitor 21 located at plant 11. Preferably, on-site monitor 21 is a desk top computer that communicates with control systems 16. Preferably, monitor 21 includes a hard drive disk memory (not shown) in which is stored as sensor data 20 the operating data collected by sensors 14 from equipment 12 and transferred from control systems 16.

Also stored in on-site monitor 21's disk memory is sensor metadata 27. Sensor metadata 27 is information about how and when operating data for power generation equipment 12 is collected by sensors 14 and the particular units used to measure the collected operating data. Sensor metadata 32 can include, by way of example, "timestamps" relating to the times that sensor data is collected and recorded and the identification of the sensors collecting the data, "sensor alias mappings" for identifying the sensors corresponding to a particular customer site, and "range values" to validate the collected sensor operating data to insure that it is within the manufacturer's range for such data.

On-site monitor 21 analyzes the sensor data 20 stored in its disk memory using an analysis platform 23 that is a software program, which provides information about the collected operating data based on procedural and behavioral algorithms to generate operational information about the power generation equipment. Analysis platform 23 determines the state of power generation equipment 12 and decides whether a predefined event has occurred that requires the generation of an alarm and some remedial action. The operational information provided by analysis platform 23 is also sent to and stored at a central management system 25.

Analysis platform 23 includes a first program 24 resident in on-site manager 21 that is a continuous diagnostic engine ("CDE") analysis software and a second program 34 resident in central management system 25 that is a central calculating engine ("CCE") analysis software. The segmentation of analysis platform 23 between the on-site location and central management system 25 expedites the rapid detection of high severity events occurring in the operation of power generation equipment 12 so that remedial action can be quickly pursued.

CDE software 24, which is resident in on-site manager 21, uses procedural and behavioral algorithms to analyze sensor data 20, generate conclusions about such data, and generate appropriate alarms when it detects the occurrence of any predefined events. The behavioral/procedural algorithms are available from standard power generation equipment modeling theory textbooks. CDE software 24 is an in-house developed software.

In analyzing sensor data 20, CDE software 24 determines the state of power generation equipment 12 by comparing sensor data 20 with equipment operating data provided by the manufacturers of power generation equipment 12 (OEMs) to determine whether any of sensor data 20 exceeds the manufacturer's operating limits for the power generation equipment 12. If any sensor data 20 does exceed the manufacturer's operating limits, CDE software 24 generates an alarm that is displayed on on-site monitor 21 and stored in a relational data base maintained at on-site monitor 21. Also stored in the relational data base of monitor 21 is the operational data collected by sensors 14 for equipment 12 and any conclusions regarding such data evidencing the state of equipment 12. Any OEM design is based on ISO conditions and does not take into account non-OEM specified operating conditions. Operational data is used to determine how the machine performs under operating conditions that vary from OEM specifications.

Only time critical predefined events requiring remedial action in an expedited timeframe are handled by the on-site power generating equipment operators using the information displayed by CDE software 24 on the computer comprising on-site monitor 21. Otherwise a monitoring team using automated central management system 25 and intranet-based coaching tools 36 provides action recommendations to the equipment operators to prevent further consequences, such as damage to, or shutdowns of, equipment 12. Some examples of events requiring an expedited handling timeframe include sudden bearing temperature rises and high step changes in vibration.

The sensor data collected over time by sensors 14 from power generation equipment 12 and any event analyses and alarms that are generated over time by CDE software 24 are periodically sent to automated central management system 25 via the Internet or other suitable communications connection 28. Preferably, central management system 25 is a server computer that includes a hard drive disk storage (not shown) for storing the sensor data from sensors 14 and the event analyses and alarms generated by CDE software 24.

Preferably, central management system 25's disk storage includes a central data base 26 for storing as sensor data 30 operational data that has been collected over time from power generation equipment located at various customer sites. Sensor data 30 would include the sensor data 20 collected by sensors 14 from power generation equipment 12. Sensor data 30 includes historical data that preferably has been collected over a period of at least three months or more. Typically, sensor data 30 includes operational data, conclusions regarding the operational data and alarms based on various conclusions regarding operational data that has been collected from power generation equipment at various customer sites.

Preferably, central management system 25's disk storage also includes sensor metadata 32 which is information about the manner in which the operating data is collected by sensors from power generation equipment located at various customer sites. Sensor metadata 32 is used to determine the rules used to analyze the sensor data 30 collected from the power generation equipment.

Also resident in central management system 25 is CCE software 34 of analysis platform CCE software 23. Like CDE software 24, CCE software 34 analyzes the sensor data 20 collected by sensors 14 and generates appropriate alarms when it detects the occurrence of any predefined events. Preferably, CCE software 34 uses standard algorithms, but also more complex information to analyze sensor data 20. CCE software 34 has more range and cross-checks so that it is capable of more complex monitoring functions. CCE software 34's range and cross-checks consist of operations which determine if inputs to the calculations are physically possible as well as checks to ensure that outputs physically possible are based on inputs conditions. Thus, for example, CCE software 34 may perform a time roll-up of operational data to ascertain total fired hours for a particular piece of equipment. It may also use the pressure and temperature at a first point in a particular piece of equipment to infer the pressure and temperature at another point in the equipment to determine whether a problem exists that will result in a predefined event requiring an alarm. CCE software 34 uses behavioral/procedural algorithms which are available from standard power generation equipment modeling theory textbooks.

Preferably, on-site monitor 21 and central management system 25 are computers. Typically, each of these computers would include a central processing unit and several system buses for coupling various computer components to the central processing unit. The system buses would typically include a memory bus, a peripheral bus and a local bus using any one of various typical bus architectures. The computers will also typically include a communications device which may be internal or external to the computer's system bus and which allows the computers to connect to the Internet for communications purposes. The computers may also include other types of peripheral devices, such as printers, displays, keyboards and monitors on which various data and other information may be displayed for use by the monitoring team.

The memory used by such computers would also typically include random access memory and hard disk drives that read from and write to magnetic hard disks. Such computers might also include other types of drives for accessing other types of media, such as floppy disks or optical disks, such as different types of CDs. These disks are typically connected to the system bus of the computer by appropriate interface circuits, and typically provide nonvolatile storage of computer-readable instructions, data and programs used by the computers. Preferably, sensor data 20 and 30 and sensor metadata 27 and 32 are stored on hard disk drives that the computers comprising on-site monitor 21 and central management system 26 read from and write to.

The present invention also uses a set of intranet-based coaching tools 36 that use historical information gathered from operating data collected by sensors, such as sensors 14, from fleet power generation equipment to either trace back from an event occurring in power generation equipment 12 to the most likely root cause of the event and determine a responsive action plan, or to trace forward and predict the probability of the consequences of an event and determine a responsive preventive action plan. Coaching tools 36 are a digitized version of statistical analysis tools and data mining tools that can be used to narrow down the probability of a second event occurring after a first event has occurred or to determine the root cause of the event so that a monitoring team can propose a preventive action plan to the operators of equipment 12 to prevent further consequences, such as damage to or shutdowns of the equipment 12. The tools would include, by way of example, turbine sequencing, turbine alarms and engineering operational algorithms, and operational data. Action plans provided in the coaching tools include recommendations concerning the continued operation of the equipment, the shutdown of the equipment, or the repair and/or replacement of equipment parts.

The method and system of the present invention use coaching tools 36 through data-driven intranet web pages that are resident on the server computer of central management system 25, and that are not publicly accessible. The tools 36 and web pages are accessible at the central management system 25 through a second communications connection 38. The web pages are "if, then" computer screens that are effectively "cause and effect" checklists to assist an operator at the equipment site, or a member of the central monitoring system, in narrowing down the cause of a problem and the likely effect of the problem occurring. By way of example, where a trip event occurs, causing a turbine to go off the power grid, the computer screens would display in the first instance a categorical list of all of the reasons known for a trip event to occur on an ordered basis from the most likely cause of a trip to the least likely cause of a trip. The computer screens would then display recommendations as to what to consider for each reason displayed. The trip reasons and recommendations would be derived from historical experience in dealing with trip situations and solutions to the problems causing them. The data regarding the causes of the trips is imperical operating data that has been collected over time.

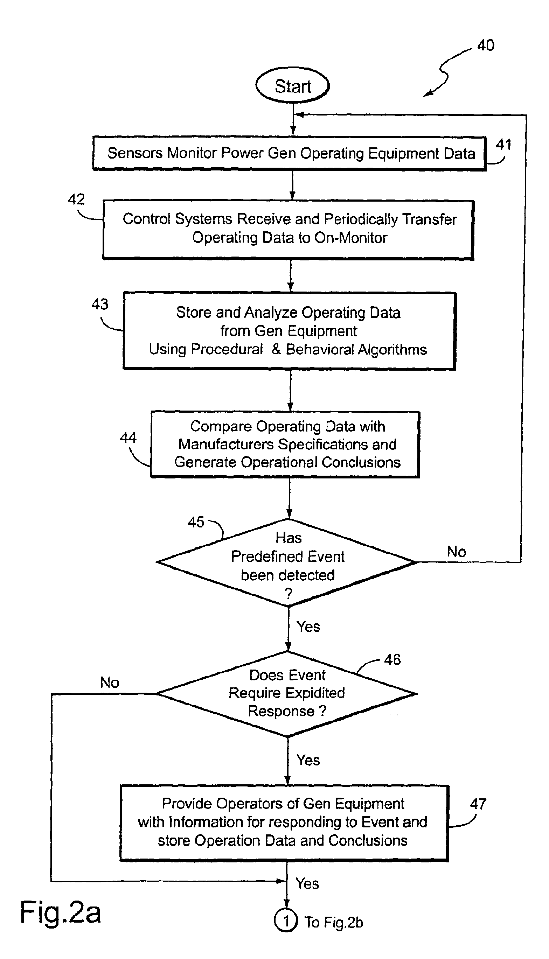

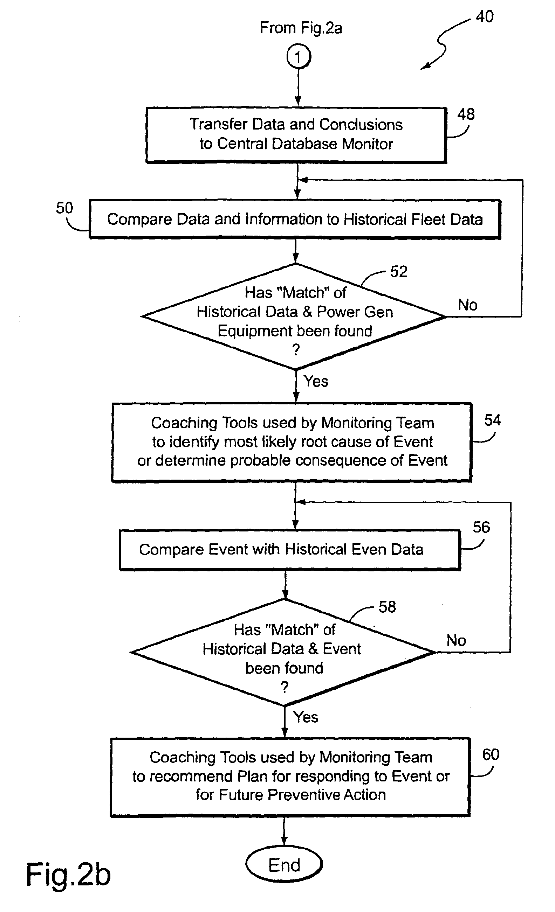

Figures 2a and 2b are a flow chart depicting the method 40 of the present invention for monitoring the operation of power generation equipment 12, detecting a predefined event, and analyzing the event for its root cause and to provide possible action recommendations to power generation equipment 12 operators to prevent further consequences from the event. Referring now to Figures 2a and 2b, at step 41, sensors 14 continuously monitor the operation of power generating equipment 12. At step 42, control systems 16 continuously receive the operating data collected by sensors 14, and periodically transfer the operating data collected by sensors 14 to on-site monitor 21 located at customer site 11. At steps 43 and 44, the operating data collected by sensors 14 and received by on-site monitor 21 is then stored in sensor data 20 data base and then analyzed by CDE software 24 using manufacturers' specifications for the equipment 12. CDE software 24 then generates operational conclusions at step 44 about power generation equipment 12 to determine at step 45 whether a predefined event has occurred. If one has, then at step 46 a determination is made as to whether the event is one requiring an expedited response. If the predefined event does require an expedited response, then at step 47 on-site monitor 21 displays web pages from coaching tools to provide suggestions for the operators of power generation equipment 12 to respond to the predefined event. The operating data collected by sensors 14 and the conclusions generated by CDE software 24 are then also stored at step 47 in the disk storage of on-site monitor 21. The operating data and conclusions stored in the disk storage of on-site monitor 21 are then periodically transferred at step 48 to central management system 25.

If it is determined at step 46 that the predefined event occurring in power generation equipment 12 does not require an expedited response, then the operating data collected by sensors 14 is transferred at step 48 to central management system 25. Such data and conclusions are then compared at step 50 by CCE software 34 to historical fleet data. If, at step 52, a match of historical data and the data and conclusions collected from power generation equipment 12, is found, then at step 54, coaching tools 36 are used so that the monitoring team can either trace back from an event the most likely root cause of the event or to trace forward and predict the probability of the consequences of the event. At step 56, the predefined event is then compared with historical event data, and at step 58, again, a determination is made as to whether a match has been found between the historical event data and the event. If it has not, the comparison continues until a match is found, whereupon at step 60, the monitoring team recommends a proposed action plan for responding to the event or for a preventive action plan to prevent the event from occurring in the future.

The system and method of the present invention allow for automatic detection remotely of predefined events on operating power generation equipment and for the diagnosis, either at the remote site of the power generation equipment or at a central monitoring location of the predefined events to provide a probabilistic expert system segmented between the remote site and the central management system to provide a monitoring team using intranet-based coaching tools to provide recommendations and solutions to the predefined events based on historical fleet operations data. The present invention allows the communication of potential event causes and consequences directly to equipment operators in an expedited timeframe of less than two hours.

For completeness, various aspects of the invention are set out in the following numbered clauses:
1. A system for detecting predefined events occurring in operating power generation equipment and for diagnosing and responding to the predefined events, the system comprising:
   an on-site monitor for analyzing operating data collected from the power generation equipment and for determining if any of the predefined events occurred during operation of the power generation equipment ;
   a plurality of sensors for collecting the operating data from the power generation equipment and for transferring the operating data to the monitor ;
   a remote management system for storing and retrieving historical data pertaining to the operation of fleet power generation equipment and to the occurrence of the predefined events in the fleet power generation equipment and for storing and analyzing the operating data collected from the power generation equipment and the event determination; and
   at least one diagnostic tool for using the operating data , event determination and historical data to decide how to respond to the occurrence of any predefined events in the power generation equipment .
2. The system of clause 1 wherein the plurality of sensors (14) are selected from the group consisting of temperature, pressure and flow sensors.
3. The system of clause 1 further comprising a communications device for transferring to the remote management system the operating data and event determinations from the on-site monitor.
4. The system of clause 1 further comprising an analysis platform for analyzing whether any predefined events have occurred, the analysis platform including a first program resident in the monitor and a second program resident in the remote management system .
5. The system of clause 4, wherein the monitor further comprises a first data storage device which contains the operating data collected by the plurality of sensors .
6. The system of clause 5, wherein the remote management system further comprises a second data storage device which contains the historical data pertaining to the operation of the fleet power generation equipment, and the event determinations and the operating data collected by the plurality of sensors .
7. The system of clause 4 wherein the first program is a continuous diagnostic engine analysis software and the second program is a central calculating engine analysis software.
8. The system of clause 7 wherein the continuous diagnostic engine analysis software determines the state of the power generation equipment by comparing sensor operating data with equipment operating data provided by manufacturers of the power generation equipment to determine whether any of sensor data exceeds the manufacturer's operating limits for the power generation equipment and generates an alarm when it detects the occurrence of any predefined events.
9. The system of clause 7 wherein the continuous diagnostic engine analysis software analyzes the operating data collected by the plurality of sensors using standard algorithms and complex information and generates an alarm when it detects the occurrence of any predefined events.
10. The system of clause 4 wherein the analysis platform uses procedural and behavioral algorithms to provide information about the operation of the power generation equipment.
11. The system of clause 1 wherein the coaching tools use the historical data to either determine the likely cause of the event and an action plan for responding to the event or predict the consequences of the event and determine a preventive action plan in response to the event.
12. The system of clause 1 wherein the on-site monitor and remote management systems include sensor metadata that is information about how and when operating data for the power generation equipment is collected by the plurality of sensors and the particular units used to measure the collected operating data.
13. The system of clause 12 wherein the sensor metadata includes timestamps relating to the times that operating data is collected and recorded and the identification of the particular sensors collecting the data .
14. The system of clause 12 wherein the sensor metadata includes sensor alias mappings for identifying the sensors corresponding to a customer site where the power generation equipment is located.
15. The system of clause 12 wherein the sensor metadata includes range values to validate the collected sensor operating data to insure that it is within the manufacturer's range for such data.
16. The system of clause 1 wherein the on-site monitor and remote management system are each a computer.
17. The system of clause 1 wherein the at least one coaching tool is selected from the group consisting of turbine sequencing, turbine alarms and engineering operational algorithms, and operational data.
18. A system for detecting predefined events occurring in operating power generation equipment at a customer location and for diagnosing and responding to the predefined events, the system comprising:
   a plurality of sensors at the customer location for monitoring the power generation equipment and collecting operating data from the power generation equipment ;
   a monitor at the customer location for analyzing the operating data collected from the power generation equipment and for determining if any of the predefined events occurred during operation of the equipment ;
   a management system at a location different from the customer location for storing and retrieving historical data pertaining to the operation of fleet power generation equipment and to the occurrence of the predefined events in the fleet power generation equipment;
   a communications device for transferring to the management system the operating data collected by the plurality of sensors and the determinations by the monitor of whether any of the predefined events occurred;
   an analysis platform for analyzing whether any predefined events have occurred, the analysis platform including a first program resident in the monitor and a second program resident in the management system ; and
   a plurality of coaching tools for using the collected operating data, determinations by the on-site monitor of whether any of the predefined events occurred, and historical data to determine the likely cause of any predefined events that have occurred and an action plan for responding to the events or to predict the consequences of the events and determine preventive action plans in response to the events.
19. The system of clause 18 wherein the plurality of sensors are selected from the group consisting of temperature, pressure and flow.
20. The system of clause 18 further comprising system controls for controlling the operation of the power generation equipment and for transferring the operating data to the monitor.
21. The system of clause 18, wherein the monitor further comprises a first data storage device which contains the power generation equipment operating data collected by the plurality of sensors.
22. The system of clause 18, wherein the management system further comprises a second data storage device which contains the historical data pertaining to the operation of the fleet power generation equipment and to the occurrence of the predefined events and the operating data collected by the plurality of sensors.
23. The system of clause 18 wherein the first program is a continuous diagnostic engine analysis software and the second program is a central calculating engine analysis software.
24. The system of clause 23 wherein the continuous diagnostic engine analysis software determines the state of the power generation equipment by comparing sensor operating data with equipment operating data provided by manufacturers of the power generation equipment to determine whether any of sensor data exceeds the manufacturer's operating limits for the power generation equipment and generates an alarm when it detects the occurrence of any predefined events.
25. The system of clause 23 wherein the continuous diagnostic engine analysis software analyzes the operating data collected by the plurality of sensors using standard algorithms and complex information and generates an alarm when it detects the occurrence of any predefined events.
26. The system of clause 18 wherein the analysis platform uses procedural and behavioral algorithms to provide information about the data collected by the collection and transfer system .
27. The system of clause 18 wherein the coaching tools use the historical data to either determine the likely cause of the event and an action plan for responding to the event or predict the consequences of the event and determine a preventive action plan in response to the event.
28. The system of clause 18 wherein the monitor (21) and the management system each includes sensor metadata that is information about how and when operating data for the power generation equipment is collected by the plurality of sensors and the particular units used to measure the collected operating data .
29. The system of clause 28 wherein the sensor metadata includes timestamps relating to the times that operating data is collected and recorded and the identification of the particular sensors collecting the data .
30. The system of clause 28 wherein the sensor metadata includes sensor alias mappings for identifying the sensors corresponding to a customer site where the power generation equipment is located.
31. The system of clause 28 wherein the sensor metadata includes a range values to validate the collected sensor operating data to insure that it is within the manufacturer's range for such data.
32. The system of clause 18 wherein the monitor is a desk top computer and the management system is a server computer.
33. The system of clause 18 wherein the plurality of coaching tools is selected from the group consisting of turbine sequencing, turbine alarms and engineering operational algorithms, and operational data.
34. A system for detecting predefined events occurring in operating power generation equipment and for diagnosing and responding to the predefined events, the system comprising:
   first means , located where the power generation equipment is located, for analyzing operating data collected from the power generation equipment and for determining if any of the predefined events occurred during operation of the equipment;
   means for collecting the operating data from the power generation equipment and for transferring the operating data to the first analyzing means ;
   second means, located at a location different from the location of the power generation equipment, for analyzing operating data collected from the power generation equipment and for storing and retrieving historical data pertaining to the operation of fleet power generation equipment and to the occurrence of the predefined events in the fleet power generation equipment ; and
   means for using the operating data, event data and historical data to determine how to respond to the occurrence of any predefined events in the power generation equipment.
35. The system of clause 34 further comprising an analysis platform including a first program resident in the first analyzing means for analyzing the operating data , and a second program resident in the second analyzing means for analyzing the operating data.
36. The system of clause 34 further comprising first means for storing the operating data collected by the collection and transfer means, the first storing means being included in the first analyzing means.
37. The system of clause 36 further comprising second means for storing the operating data collected and transferred by the collection and transfer means, the second storing means being included in the second analyzing means.
38. The system of clause 34 wherein the first and second analyzing means use procedural and behavioral algorithms to analyze the collected operating data and decide whether a predetermined event has occurred.
39. The system of clause 34 wherein the coaching tools use the operating information to either determine the likely cause of the event and an action plan for responding to the event or predict the consequences of the event and determine a preventive action plan in response to the event.
40. A method of detecting predefined events occurring in operating power generation equipment (12) and of diagnosing and responding to the predefined events, the method comprising the steps of:
   collecting operating data for the power generation equipment and storing the operating data at a location where the power generation equipment is located;
   analyzing at the location where the power generation equipment is located the operating data collected from the power generation equipment to determine if any of the predefined events occurred during operation of the equipment;
   storing at a location different from where the power generation equipment is located historical data pertaining to the operation of fleet power generation equipment;
   storing at the location different from where the power generation equipment is located the collected operating data and any determination as to the occurrence of any of the predefined events in the power generation equipment; and
   using the operating data , event data and historical data to determine if any of the predefined events occurred, and if so, how to respond to the occurrence of any predefined events in the power generation equipment.
41. The method of clause 40 wherein the step of analyzing the operating data comprises using procedural and behavioral algorithms to provide information about the operating data.
42. The method of clause 40 wherein the step of using the coaching tools comprises using the operating information to either determine the likely cause of the event and an action plan for responding to the event or predict the consequences of the event and determine a preventive action plan in response to the event.
43. The method of clause 40 wherein the step of analyzing the operating data comprises analyzing the operating data at the site at which the power generation equipment is located when the potential causes of the predefined events and the consequences of such events or action recommendations must be identified in an expedited timeframe to prevent further consequences from the occurrence of the predefined events.
44. The method of clause 40 wherein the step of analyzing the operating data comprises analyzing the operating data at the site at which the power generation equipment is located and analyzing the operating data located at a second site at which the power generation equipment is not located when the potential causes of the predefined events and the consequences of such events or action recommendations need not be identified in an expedited timeframe to prevent further consequences from the occurrence of the predefined events.

## Claims

1. A system for detecting predefined events occurring in operating power generation equipment and for diagnosing and responding to the predefined events, the system comprising:
an on-site monitor for analyzing operating data collected from the power generation equipment and for determining if any of the predefined events occurred during operation of the power generation equipment;
a plurality of sensors for collecting the operating data from the power generation equipment and for transferring the operating data to the monitor ;
a remote management system for storing and retrieving historical data pertaining to the operation of fleet power generation equipment and to the occurrence of the predefined events in the fleet power generation equipment and for storing and analyzing the operating data collected from the power generation equipment and the event determination; and
at least one diagnostic tool for using the operating data , event determination and historical data to decide how to respond to the occurrence of any predefined events in the power generation equipment.

2. The system of claim 1 wherein the plurality of sensors (14) are selected from the group consisting of temperature, pressure and flow sensors.

3. The system of claim 1 further comprising a communications device for transferring to the remote management system the operating data and event determinations from the on-site monitor.

4. The system of claim 1 further comprising an analysis platform for analyzing whether any predefined events have occurred, the analysis platform including a first program resident in the monitor and a second program resident in the remote management system .

5. The system of claim 4, wherein the monitor further comprises a first data storage device which contains the operating data collected by the plurality of sensors.

6. The system of claim 5, wherein the remote management system further comprises a second data storage device which contains the historical data pertaining to the operation of the fleet power generation equipment, and the event determinations and the operating data collected by the plurality of sensors .

7. The system of claim 4 wherein the first program is a continuous diagnostic engine analysis software and the second program is a central calculating engine analysis software.

8. The system of claim 7 wherein the continuous diagnostic engine analysis software determines the state of the power generation equipment by comparing sensor operating data with equipment operating data provided by manufacturers of the power generation equipment to determine whether any of sensor data exceeds the manufacturer's operating limits for the power generation equipment and generates an alarm when it detects the occurrence of any predefined events.

9. The system of claim 7 wherein the continuous diagnostic engine analysis software analyzes the operating data collected by the plurality of sensors using standard algorithms and complex information and generates an alarm when it detects the occurrence of any predefined events.

10. The system of claim 4 wherein the analysis platform uses procedural and behavioral algorithms to provide information about the operation of the power generation equipment.
